# EUROPEAN PATENT APPLICATION

(11) **EP 4 717 954 A1**
(43) Date of publication of application: **01.04.2026**
(21) Application number: 25204581.0
(22) Date of filing: 25.09.2025
(51) Int. Cl.: F16K 15/03, F24F 11/35, A62C 2/14

(54) **NON-RETURN VALVE, MAINLY SMOKE AND/OR FIRE NON-RETURN VALVE**

(30) Priority: 27.09.2024 SK 500992024 U
(71) Applicant: Systemair Production a.s., 900 43 Kalinkovo (SK)
(72) Inventor: Halász, Kristián, 931 01 amorín (SK); Pogány, udovít, 931 01 amorín (SK); Repovský, Michal, 941 44 Hul (SK); Cudnák, Milan, 069 01 Pichne (SK); Lorinc, Ján, 900 27 Bernolákovo (SK); Gnebus, Luká, 930 41 Hviezdoslavov (SK); Baniar, Matú, 971 01 Prievidza (SK); Klochak, Uliana, 931 01 amorín (SK)
(74) Representative: Porubcan, Róbert

(57) **Abstract**

The non-return valve has blades (2) in the closed position in two divergent half-planes (4). The intersection of the first half-plane (4) and the second half-plane (4) is identical with or parallel to the axis of the blades (2) or to the axes of the blades (2), while at least part of the counterweight (6) is located in the half-space opposite the half-space with the blade (2). The angle formed between the first half-plane (4) and the second half-plane (4) from the gas inlet side is 180° + 2α, where α is in the range up to 45°, preferably 1° to 30°, especially preferably 11°. The blades (2) in the closed position abut with their edges to the contact strip (7), which is fixedly attached to the edge of the body (1), while lying in the half-planes (4). The blade (2) is balanced to the axis of the shaft (3), while the counterweight (6) and the arm (5) can be formed in one piece, preferably from a steel wire with a circular cross-section. The partition (8) can have uneven edges, preferably it has wavy and/or sawtooth-like and/or sinusoidal edges.

## Description

### Field of technology

The invention concerns tiltably mounted wing blades of a non-return valve, in particular a smoke and/or fire non-return valve, where the blades close the flow cross-section of the valve body during the reverse flow of gases. The new technical solution balances the wing blade using a counterweight, thanks to which the non-return valve can be used in any installation position and at the same time has high reliability, low pressure loss and low noise.

### Prior state of the art

There are various designs of non-return valves in air-conditioning systems that operate as non-return valves allowing gas flow in one, permitted direction. A non-return valve with wing-mounted blades (in the shape of a butterfly) has a flexible element for pressing the blades into the closed position. The flow of gases (usually air) in the permitted direction pushes the blades into the open position against the action of the flexible element. In order to achieve low pressure loss and low noise when gases flow in the permitted direction, it is advisable that the flexible element does not create a force or moment significantly greater than that necessary to bring the blade into the extreme closed position. Non-return valves usually have a prescribed installation position for which the force relationship between the flexible element and the weight of the blade is dimensioned. In the event of a change in the installation position compared to the prescribed orientation, the weight of the blade may create a force moment that the flexible element cannot overcome, and in such a case the non-return valve may not close reliably.

This deficiency can be solved by increasing the force or torque exerted by the flexible element on the valve's blades, but this causes an increase in the resistance to opening the blades when the gases flow in the permitted direction and increases the pressure loss depending on the installed position. The non-return valve can be designed as a smoke and/or fire non-return valve, where the blades are resistant to increased temperature, which usually results in an increase in the weight of the blades.

Publications US2019353371, EP2140914A1, US4146048A, US2019353371 A1 describe a fire valve with two wing blades, where the weight of the blade is compensated by a sufficient force of the flexible element. In the document DE3510167A1, a bearing surface of the blades is described, which is inclined with respect to the perpendicular line onto the direction of gas flow, while both blades in the closed position are located in the same plane.

The deficiencies with the balancing of the blades are partially solved by the publication SK202350031U1 of the applicant of the present invention, which uses a counterweight connected to the blade by means of a lever. This achieves balancing of the blade for several installation positions and then a flexible element with a small force is sufficient to close the blade.

It is further desirable to improve the balancing of the non-return valve's blades while maintaining manufacturing and installation simplicity so that the non-return valve, or smoke and/or fire non-return valve, allows installation in any position and that its flow properties are the same in different positions.

### Essence of the invention

The invention is defined in patent claims 1 to 15. The deficiencies in the prior art are substantially remedied by a non-return valve (non-return damper, check valve), in particular a smoke and/or fire non-return valve, the body of which is intended for connection to an air conditioning duct or is intended for insertion into an air conditioning duct, where the non-return valve includes two tiltable wing blades mounted in the body on a common axis or on parallel axes, which are essentially perpendicular to the direction of gas flow, where the mounting of the blade allows it to be tilted from a closed position to an open position, where the first blade in the closed position is located in the first half-plane and the second blade in the closed position is located in the second half-plane, and where the flexible (elastic) element presses the blade into a closed position, in which the blade abuts with its edge to the stop in the body and closes the internal cross-section of the body, whereby the flexible element acts on the blade in a direction opposite to the permitted direction of gas flow, and where the blade has, on the gas inlet side, an arm with a counterweight connected for at least partially balancing the blade relative to its tilting axis, according to the present invention, the essence of which lies in the fact that the first half-plane and the second half-plane of the blades in the closed position are divergent and the intersection of the first and second half-planes is identical with or parallel to the axis of the blades or to the axes of the blades, while at least part of the counterweight is located in the half-space opposite to the half-space where the arm is located. The angle between the first half-plane and the second half-plane recognized from the side of the permitted gas inlet is greater than 180°. The permitted gas inlet here denotes the side from which the valve does not close the gas flow. If the intersection of the two half-planes does not coincide with the axis of the two blades, it is parallel to this axis or to both axes of the two blades and the intersection is located near the axis or two axes, respectively, while the intersection passes in the transverse axis of the body.

The blades are placed in the body, which means that they are inside the channel intended for gas flow in the body or are located on the edge or near the edge of the body or within the body. If the non-return valve is intended to be inserted inside an air duct, it will usually have a short body, i.e. it will have a small length of the sheath in the longitudinal axis and the blades will abut to the edge of the body in the closed position. In other positions, the blades will protrude from the body of the non-return valve. In another embodiment, the body may overlap the blades in a transverse view even in the fully open position. For all cases of bodies, the term "blades placed in the body" is used in this document.

The dividing plane for dividing the space into two half-spaces is the plane in which the blade lies in the closed position or the plane in which the axis of the blade lies and which is also parallel to the blade in the closed position. The position of the counterweight balances the blade to its axis of placement.

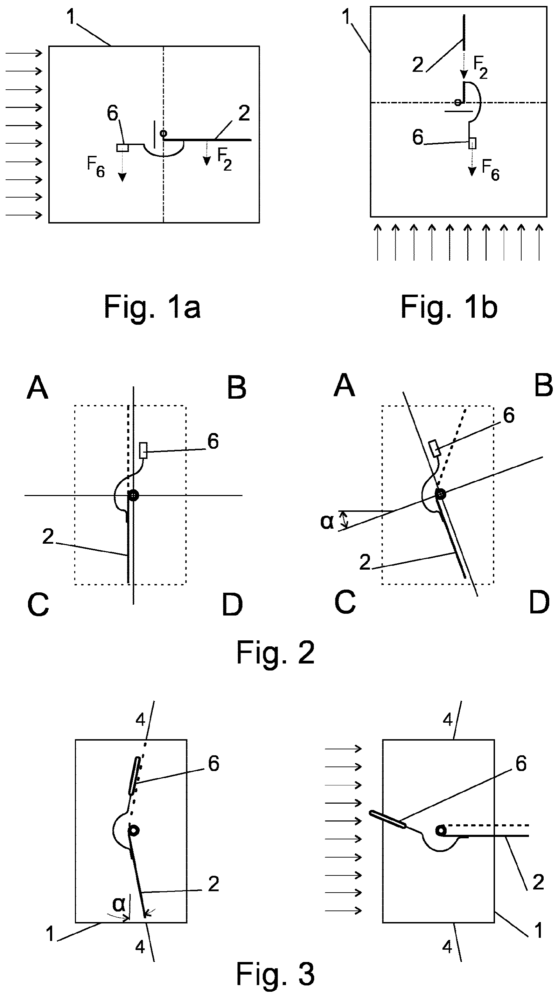

The mutually divergent position of the half-planes of the blades in the closed position allows the counterweight to be located in the opposite half-space. If the counterweight is attached to the blade according to the prior art, as shown in Figure 1, the counterweight passes into the opposite half-plane and thus achieves partial balancing of the blade. In such a case, the blade is balanced in the position according to Figure 1a, but in the installation position according to Figure 1b, only partial balancing is achieved, since the counterweight does not act in the vertical direction on the correct arm. It is precisely the tilting of the counterweight into the half-space opposite to the point of attachment of the arm according to the present invention that creates the possibility of achieving complete balancing, when the centre of gravity of the common mass of the blade, arm and counterweight (and possibly also the seal) is located in the axis of the blade's placement.

Balancing in this document refers to the balancing of the weight distribution of the entire pivoted group of parts around the axis of rotation so that the centre of gravity of the group is located on the axis. It is not necessary that the centre of gravity is located on the axis exactly in the middle of its length. The counterweight advantageously balances the moment of the entire movable group, which includes the blade with hinges, the arm and the counterweight. Balancing ensures that even without the action of the spring, the blade tends to remain in a given position, or has a slight tendency to close.

An important feature of the present invention is the displacement of the counterweight into a quarter-space (quadrant) which is opposite through the placement axis to the quarter-space in which the blade with the arm is placed. If the individual quarter-spaces are designated according to Figure 2 as quarter spaces A, B, C, D and the blade with the arm is placed in quarter-space A, then at least part of the counterweight will be located in quarter-space D. The dividing planes for separating the quarter-spaces are perpendicular to each other and their intersection coincides with the axis of the blade's placement. Here we see that meeting this criterion encounters a spatial limitation, when the passage of the counterweight into the desired quarter-space is prevented by a collision with the adjacent blade. This problem is solved by the oblique relationship of the first half-plane and the second half-plane in which the blades are in the extreme closed position, as shown in Figure 2 on the right. Until now, non-return valves have had one common plane of the closed position of both wing-mounted blades. The folding of the closing surface into the form of two mutually divergent half-planes provides space for the presence of a counterweight without collision with the neighbouring blade.

The mutual angle of the first half-plane and the second half-plane observed from the side of the location of the arms (i.e. from the side of the gas inlet in the permitted direction) will be greater than 180°, usually 180° + 2α, where α is in the range up to 45°, preferably 1° to 30°, especially preferably 11°. The larger the angle α, the more free space is created for the placement of the counterweight, but this reduces the available angular range of rotation of the blade between the fully closed and fully open positions. The semicircular plan shape of the blade, which is typical for α = 0, is adjusted to a semi-elliptical one, where the elongation of the major semi-axis corresponds to the inclination α.

The blade is connected to the counterweight by an arm, which is attached to the blade surface or blade hinge at one end and carries a counterweight at the other end. The arm can be shaped so that it bends to avoid collisions with the crossbar, shaft, or hinges forming the blade hinge. In a simpler design without a crossbar, the arm can be replaced by a boom that is connected to the blade hinge and the boom then carries the counterweight or the counterweight is connected directly to the hinges. The weight of the counterweight is dimensioned according to the weight of the blade and the length of the arm on which the counterweight acts. An arrangement where the counterweight and the arm form a single unit made of a solid metal profile has proven to be advantageous. The counterweight can be formed of a steel wire with a sufficient cross-section, for example with a circular cross-section from 2 mm to 15 mm. To obtain the required weight of the counterweight, the appropriate length of wire is calculated and then shaped to fit into the available area delimited by the plan of the blade, for example in the shape of a semicircle. The use of a circular cross-section of wire on the counterweight brings the advantage of smooth flow around the gas, usually air, at any angular position. Since the counterweight is located in the direction of the incoming gas, the absence of edges is important for low noise emission.

The wire or similar profile in the role of the counterweight is preferably shaped predominantly in one plane, which is chosen so that in the fully open position the planes with both counterweights are parallel to the direction of the air flow. In the relevant plane, the wire is bent in several bents so that the necessary length of wire with the required weight is distributed on the available area to ensure the balancing moment. The arcs of the counterweight of the first and second blade have lines that prevent their mutual collision when moving to the fully open position. For example, the shape of the counterweight of the first blade will externally copy the shape of the counterweight of the second blade. Bending the wire into the form of a counterweight also provides the advantage of simple variations for different sizes and modules of the valve, the wire can be bent using a CNC machine without the need to manufacture fixtures or moulds for different sizes of valves. The metal counterweight is durable and fulfils its function even in the event of a fire.

In addition to the balancing function, the counterweight placed on the inlet side proved to be a suitable means of stabilizing the fully open position of the blade when the air flow is in the permitted direction.

In order to achieve sufficient balancing force moment, it is advantageous if the counterweight extends beyond the edge of the blade by at least a quarter of the internal transverse dimension of the valve body. It is advisable if the counterweight reaches the inner edge of the valve body with a certain clearance and reserve, thereby creating a sufficient arm of the counterweight's gravity force.

Typically, a non-return valve will have a cylindrical outer body, for example made of galvanized steel sheet or stainless steel; other cross-sections are also possible, for example a rectangular or square cross-section. The selected cross-section of the valve is evenly divided between two wing blades arranged in a butterfly wing structure. An arrangement is also possible where cross-sections are formed in the body for several pairs of wing blades, which have an arrangement according to this description. The first peripheral edge of the body may be provided with an oblique onset, a hem for better direction of the air flow. The peripheral seal on the outer diameter of the body may include a first seal made of a flexible material and a second seal made of an intumescent material that foams at higher temperatures in the event of a fire. In another realization, the intumescent seal may be covered with a glass textile material or a similar substance that does not produce combustion products even at higher temperatures. The non-return valve may be designed as a cassette for insertion into an air duct. The arrangement of the first and second seals next to each other on the body's sheath reduces the space requirements in the radial direction, thereby aiming to achieve the largest possible internal diameter of the valve body for a given external diameter. The external diameter is normally determined by a graduated series of commonly used air duct diameters.

The second edge of the body in the side view is inclined in two half-planes; this second edge is defined by a section through two mutually divergent half-planes. In the side view, when viewed in the axis of the blade placement, the second edge is shaped like the letter V with an apex angle of 180° - 2α. In one realization of the present invention, a contact strip is firmly attached to this second edge, for example soldered or welded, which is formed on the plate as an annulus connected by a crossbar, the annulus being elliptical in the developed shape. There is a bending line on the crossbar, by which the plate is bent into an angle of 180° - 2α. This bending increases the rigidity and strength of the plate, the shaft holder and the entire body. Attaching a separate contact strip to the edge of the body as opposed to pressing the stop directly on the body allows the internal flow cross-section to be increased and thus the pressure loss to be reduced. The flow cross-section of the valve is defined in the plate by two openings separated by a partition. The openings are semi-elliptical and essentially the same, and the edges of the blades extend beyond the edges of the openings.

The shaft holder can be formed by a continuation of the sheet metal body, for example, so that two strips from the body pass through the holes in the plate. There are holes in the strips for inserting the shaft. In one of the preferred arrangements, the plate has a peripheral contact strip, which is divided by a partition, thereby determining two openings for air flow in the plate, while the shape of each blade with a certain overlap corresponds to the respective opening in the plate. The partition is perpendicular to the longitudinal axis of the body, is parallel to the shaft and passes through the centre of the body. Preferably, the partition forms surfaces for the blade to abut to and at the same time it covers the hinges of both blades when viewed from the air inlet side. This covering prevents the direct air flow into the gaps between the hinges of adjacent blades and reduces noise generation. The complete hinge mechanism of each blade can be formed by at least two hinges, which were created by folding the sheet metal so as to create a cavity for inserting the shaft. It is preferred if the strip of the partition has uneven edges, for example, it has wavy or saw-tooth or sinusoidal edges. The partition strip may have a group of recurrent protrusions at the edges interspersed with straight lines. The protrusions may, for example, have a rounded shape, with this shape being offset on opposite edges, where at one point the partition strip has a protrusion on one edge and a straight line on the opposite edge. The alternation of protrusions and straight lines may correspond to the alternation of blade hinges or a multiple thereof.

The holder can carry one shaft common to both blades or can carry two parallel shafts for separate placements of each blade. The flexible element can be a compression or tension or torsion spring. To press the blades into the closed position, one flexible element can be used, preferably in the central zone, or two flexible elements centrally symmetrically arranged can be used. The flexible element is preferably a torsion spring threaded onto a common shaft of the blade placement, with the arms of the torsion spring resting on the surface of the blades and closing them to each other. This achieves a simple construction with a small number of parts. In this arrangement, the torsion spring does not have to rest on the valve body or on the crossbar, respectively; the preload moment from the torsion spring is converted into a mutual closing moment of both blades. Reducing the torque requirements of the torsion spring due to balancing brings about a reduction in the size of the torsion spring and it is reliably covered by a partition against the action of air, which can also carry abrasive impurities leading to wear. The preload of the torsion spring, which is threaded onto the shaft, creates a force reaction on the shaft, thus maintaining its stable position in the holder even without mountings or circlips.

The edges of the blades and/or the contact strips and the crossbar are equipped with a seal to seal the blades in the extreme closed position. In the extreme closed position, each blade lies in its own half-plane, which forms an angle of 180° - 2α with each other. Thanks to the deviation by the angle α, space has been created for placing the counterweight in the opposite quarter-space to the blade position so that the counterweight does not collide with the neighbouring blade. This does not exclude the possibility that the blades are formed with recesses (overhangs) to at least partially receive the counterweight of the neighbouring blade. Shallow recesses, where the depth of the recess does not exceed one tenth of the blade width and the edge of the recess is sufficiently distant from the blade's edge, can be formed directly without the risk of the edges of the blades curling. For deeper recesses, these can be formed on a separate pressed piece, which is then tightly connected to the opening in the blade's surface. In principle, however, it is advantageous to use the angle α to create sufficient space for the counterweight without combining with a recess. The blade can be advantageously made of sheet metal, for example galvanized steel sheet or stainless steel. Sufficient strength and rigidity of the blade is achieved even with a small thickness of the sheet, thereby reducing the requirements for the size of the balancing moment. By using galvanized sheet metal or stainless steel sheet metal, the need for surface treatment of the blade to ensure corrosion resistance is eliminated. The counterweight in the form of a bent wire can be spot-welded at two ends to the blade's surface without the risk of deformation of the blade. Simplification of production processes is also important because non-return valves need to be produced in a wide range of sizes, which complicates production logistics. Reducing the number of operations is welcome.

A simplified design of a non-fire-resistant non-return valve, mainly non-fire-resistant non-return valve, may include mutually inclined half-planes for the blades as described above, with the counterweights attached to or through the blade hinges, i.e. without arms that bypass the partition. In this arrangement, the partition is absent, the hinges are not covered by the partition on the air inlet side. The result is a simpler design, where each blade hinge can carry a counterweight. The flat nature of the counterweight allows a small angle α to be used.

The non-return valve according to the invention may be provided with at least one handle to facilitate installation and service work. In particular, in situations where the non-return valve is inserted as a cassette into the interior of an air duct, it is convenient for the body of the non-return valve to have handles on both sides. The handle on the inlet side may be a simple rod running transversely through the centre of the body. The handle on the outlet side may have a more voluminous design, when it lies in the curtain of fully open blades in the extreme position. This handle may form a stop for the blades in the fully open position. Precise determination of the end position limits the oscillation of the blades.

The blades open by moving towards each other, they can be opened up to the position of mutual contact or to the position of contact with the handle. The blades close to the position where they are at an angle of 180° - 2α to each other. In the closed position, the edges of the blades rest on the contact strip, the contact is provided with a seal. When opening the blades, the counterweights move against each other in the space on the gas inlet side. At the same time, the area of the counterweight in the flow of flowing gas must be smaller, or rather significantly smaller than the planar area of the blade itself exposed to the flowing gas, in order to maintain the non-return function of the valve. The aerodynamic pressure exerted by the flowing gas on the counterweight in the closed position acts against the opening of the respective blade, so it is necessary that it reliably outweighs the force moment exerted by the gas on the blade itself. However, meeting this condition is not problematic and, for example, the wire used to create the counterweight has low aerodynamic resistance.

Placing the counterweight in the direction from the blade surface above the blade's axis of rotation into the half-plane opposite the blade and at the same time into the opposite quarter-space opposite the blade's centre of gravity brings the moment of force necessary to balance the blade to its axis of rotation, with the centre of gravity of the counterweight creating a force moment in balance with the force moment from the blade's centre of gravity.

The permitted direction of gas flow, especially air, is considered to be the direction in which the blades open, namely due to the pressure of the flowing gas, which acts on the blade surface and thereby pushes through the force moment of the flexible element. The opposite, prohibited direction of flow leads to the blades closing all the way to the stop, when the blades close the openings in the plate and thus close the entire flow cross-section of the valve body. The intumescent material in the seal between the blade and the contact strip increases its volume at higher temperature, seals the connection and at the same time locks the blades in the closed position.

The body may be provided on the inside with at least one wing blade position sensor, for example a closed end position sensor. The sensor is then connected to a central system.

The proposed invention has proven itself advantageous primarily due to its simple design, which also enables modular production of various sizes using a small number of components. The counterweights can be easily manufactured from wire of a suitable diameter and length according to the required weight. The non-return valve according to the invention has blades balanced in any installation position, thanks to which a small force of the flexible element is sufficient to close the blades. The non-return valve has a low pressure loss, also due to the large clear flow cross-section within the respective available outer diameter of the valve body. The contact strip as a blade stop is located at the end of the body at the outer diameter of the body; it is extended to a larger diameter than the stops on the inside of the body known in the prior art. The attachment of the contact strip to the askew edge of the body increases the rigidity of the body, especially if the contact strip is welded or soldered to the body. Bending the plate into two half-planes, where the bending line passes along the middle of the partition, also contributes to the increased strength and rigidity. The result is a reliable structure with low vibration and low noise emission, while the non-return valve is simple in design and production and has high resistance and stability even in the event of a fire.

### Description of drawings

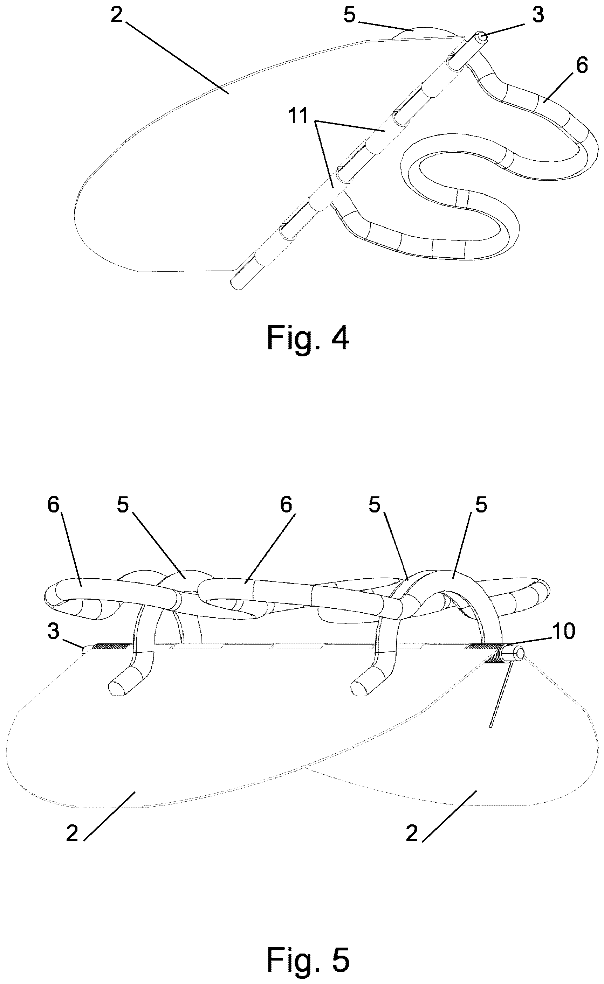

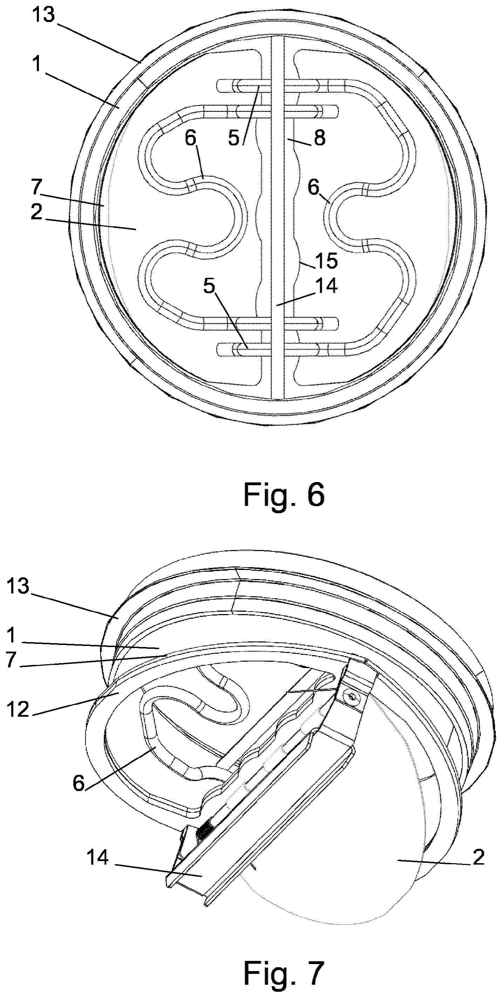

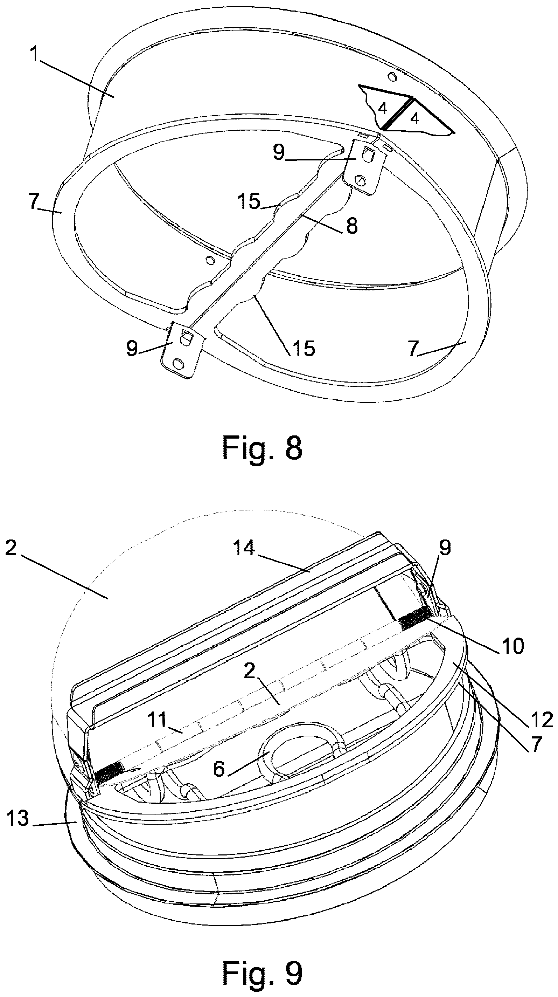

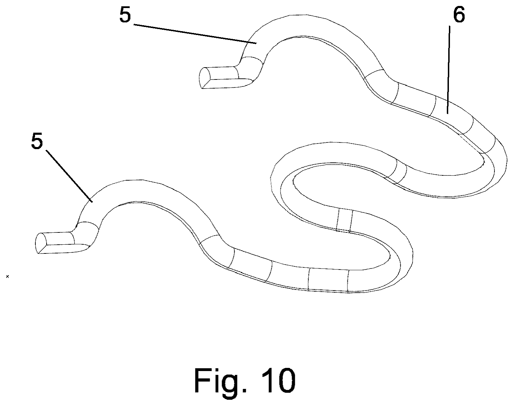

The invention is further explained with the help of figures 1 to 10. The illustrated scale of individual elements, the ratio of their dimensions, the position of the wing blades, the shape of the arm and the counterweight, are only examples and cannot be interpreted as limiting the scope of protection.
Figure 1 is a simplified illustration of the prior art balancing of a single valve blade using a lever and counterweight. Figure 1a shows the installation position where the blade is essentially balanced, while Figure 1b shows the same valve in a rotated installation position where the blade is unbalanced, where both gravity forces act in the same moment direction.
Figure 2 shows the division of space into four quarter-spaces A, B, C, D, showing the relative position of the blade and the counterweight in the mutually opposite quarter-spaces according to the present invention. The right part of Figure 2 shows the rotation of the system by an angle α, which allows to avoid collisions of the counterweight with the surface of the neighbouring blade, which is shown by a dashed line.
Figure 3 schematically shows one wing blade with an arm and counterweight according to the first example without showing the second neighbouring blade, where on the left the blade is in the extreme closed position and on the right in the extreme open position. For a greater clarity, the other parts are not shown. The arrows indicate the direction of the permitted air flow at which the wing blade opens. When only one blade is shown, it is easier to see in which path the arm and counterweight move. A suitable spatial arrangement is possible even at a small angle α.
Figure 4 shows one blade with an attached arm and counterweight according to example 1, with a shaft inserted in the blade hinges. Subsequently, in Figure 5, the assembly according to the previous figure is supplemented with a second blade with the corresponding counterweight, and torsion springs are attached to the ends of the shaft.
The valve in figure 6 is shown in a front view from the gas inlet side, where the shape of the formed steel wire counterweight in the closed position is visible.
Figure 7 is a perspective view of the non-return valve from the outlet side, with one blade together with the counterweight removed from the illustration to improve clarity of the arrangement of elements.
Figure 8 shows a view of the body with the contact strip attached without a seal, showing the shaft holder formed of sheet metal protruding through the opening in the plate. The contact strip and partition are shown without a seal.
Figure 9 is a three-dimensional view of a smoke non-return valve with partially open blades.
Figure 10 shows the arms and counterweight formed in one piece from wire according to the first example of realization.

### Examples of realization

### Example 1

The smoke non-return valve according to this example as shown in figures 3 to 7 has a cylindrical body 1 made of galvanized steel sheet. The body 1 forms a channel for the air flow. The first peripheral edge of the body 1 is formed to be hemmed outwards at an angle and the outer diameter of the hem approaches the inner diameter of the duct into which the smoke non-return valve is to be inserted with a small gap. The peripheral seal 13 of the body 1 serves to seal the outer surface of the valve against the inner surface of the air duct into which the valve is installed as a separate cassette by simply inserting it into the location prescribed by the project for creating fire zones. The peripheral seal 13 includes a cold seal made of flexible material and a hot seal made of intumescent material, both placed next to each other, which, by foaming at a higher temperature, reliably close the gap between the outer surface of the body 1 and the inner surface of the air duct into which the valve is inserted.

The second edge of the body 1 is inclined in two half-planes 4; in a side view in the direction of the axis of the blade 2 the edge of the body 1 is shaped like the letter V. Each half-plane 4 deviates from the plane perpendicular line led to the longitudinal axis of the body 1 by an angle α = 11°; these two half-planes 4 mutually form an angle of 158° from the air outlet side, and from the air inlet side in the permitted direction they form an angle of 202°. This second edge of the body 1 is provided with a contact surface for the edge of the blade 2, which is formed by a contact strip 7 attached along the edge of the cylindrical body 1, while the contact strip 7 lies in both half-planes 4 shaped like the letter V.

In this example, the contact strip 7 is part of a sheet metal pressing or cutout, which includes an annulus and a partition 8 on the plate. The annulus is elliptical in its developed shape, so that after bending to an apex angle of 158° it forms a flange in contact with an oblique cut on the cylindrical body 1 of the valve. In this example, the contact strip 7 is welded to the body 1 and thus significantly increases the rigidity and strength of the body 1, which is required in particular to ensure gas tightness at higher temperatures, when the body 1 is to be resistant to irregular deformations. At the same time, a larger inner diameter of the blade's 2 stop is obtained, and thus the pressure loss is reduced for a given available outer diameter of the valve. The outer diameter of the contact strip 7 corresponds to the outer diameter of the hem on the opposite side of the body 1, which creates support for parallel placement of the valve inside the air duct. At the points where the partition 8 is connected to the annulus, there are rectangular openings through which the shaft 3 holder 9, formed as a short strip of sheet metal extending from the cylindrical body 1, passes.

The partition 8 is perpendicular to the longitudinal axis of the body 1, it passes through the centre of the body 1, and it has the shape of a narrow strip with a series of recurrent protrusions 15 and recurrent straight lines. The protrusions 15 have a rounded shape in this example and alternate regularly with straight lines, whereby this shape is mutually offset on the opposite edges, where in one place the partition 8 has a protrusion 15 on one edge and a straight line on the opposite edge. The alternation of the pair of protrusions 15 and the straight lines corresponds to the gaps between the hinges 11 which form a complete hinge mechanism for the swinging placement of the blades 2. The partition overlaps the joint of the hinges 11 of neighbouring blades 2 and reduces the noise level when air flows around it.

The shaft 3 is inserted into the holders 9. The hinges 11 of both blades 2 are pulled onto the shaft 3. The flexible element is formed by a pair of torsion springs 10, the arms of which rest on the surface of the blades 2 and mutually press them into the closed position. The contact strip 7 and the partition 8 have a seal 12 attached at the point of contact with the blade 2. In the extreme closed position, both blades 2 abut against the stop formed by the contact strips 7, with each blade 2 lying in its own half-plane 4, which form an angle of 158° to each other. Due to the deviation of the extreme position by an angle α = 11°, a space has been created for placing the counterweight 6 in the quarter-space opposite to the position of the blade 2 so that the counterweight 6 does not collide with the neighbouring blade 2. The counterweights 6 are located on the air inflow side.

In this example, the arm 5 and the counterweight 6 are made as a single unit from a steel wire with a circular cross-section. The wire acting as the counterweight 6 is shaped with arcs in one plane, where the arcs' purpose is to distribute the length of the wire necessary to create the desired balancing moment. The arcs of the counterweight of the first and second blades 2 have lines that prevent their mutual collision when moving to the extreme open position. In this example, each counterweight 6 has three arcs, with the line of the first counterweight following the lines of the second counterweight from the outside. The arms 5, also made of wire, have arcs above the zone with the shaft 3 in order to reliably avoid contact with the hinges 11 of the blades 2. The circular cross-section of the profile from which the counterweight 6 is made and also the arms 5 are suitable for air flow in any angular position.

The blades 2 are pressed against the direction of gas flow by torsion springs 10, which are mounted on the ends of the shaft 3. The torsion springs 10 press the blades 2 onto the obliquely led contact strips 7 with a seal 12. The counterweight 6 balances the moment of the entire moving group - blade 2 with hinges 11, arm 5 and counterweight 6 - so that even without the action of the torsion spring 10, the blade tends to remain in a given position, or has a slight tendency to close. In such a case, even a small force, or rather a small force moment created by the torsion spring 10, is sufficient for the reliable function of the non-return valve.

To facilitate the installation of the valve inside the air duct and to enable its later removal in the event of service work, the valve body 1 has two handles 14, with the first handle 14 located on the air inlet side and the second handle 14 located on the air outlet side. The first handle 14 has a minimalist design, consisting of a transverse rod of circular cross-section, which is inserted into opposing openings in the body 1. The second handle 14 has a wider grip formed by bending the sheet metal into a C-profile. At the edges, the second handle 14 is riveted to the holders 9 and the ends of the grip are inserted into the hole in the contact strip 7 next to the holder 9. This creates a stiffening of the holders 9 and the body 2 itself, which also contributes to the desired properties of the valve.

The flow cross-section of the valve is defined in the plate by two openings, which are separated by a partition 8. The openings are approximately semicircular, or semi-elliptical, corresponding to the shape of the blade 2. Both blades 2 are mounted on a common shaft 3. The complete hinge mechanism of the blade 2 is formed by three or four hinges 11 which were created by bending the sheet metal. The blade 2 is made of metal sheet.

### Example 2

The smoke and/or fire valve in this example without a picture differs from the previous example in that it has a rectangular flow cross-section, where the blades 2 have a rectangular ground plan shape. To balance the first blade 2, one counterweight 6 is used, which is connected to the blade 2 via one arm 5 led in the central zone. To balance the second blade 2, two smaller counterweights 6 are used on two separate arms 5, which are led in the edge zones of the blade 2 and thus avoid collisions with the counterweight 6 of the first blade 2.

Blades 2 are made of stainless steel sheet by cutting (slashing) or laser cutting.

### Example 3

The non-return valve in this example has two blades 2, which have a recess to receive part of the counterweight 6 of the neighbouring blade. Even at a small angle α = 5° this allows balancing of the blade with the centre of gravity exactly in the axis of the shaft 3 of the respective blade 2.

### Example 4

The non-return valve in this embodiment has a simplified design without a partition 8. Booms extend from the hinges 11, which carry counterweights 6. Each blade 2 has three booms and three flat counterweights 6. Booms with counterweights 6 move in adjacent planes when the blade 2 rotates. Counterweights 6 consist of zinc strips riveted to the booms. The flat nature of the counterweights 6 allows the use of a small angle α = 4°. This embodiment is suitable for non-return valves without fire resistance, but its use for higher temperatures is not excluded, where intumescent sealing can be applied, for example, to the hinges 11 of the blades and to the contact strips 7.

### Industrial applicability

The industrial applicability is obvious. According to the present invention, it is possible to industrially and repeatedly produce and use non-return valves, for example as smoke and/or fire non-return valves, which have a simple and reliable construction with the possibility of installation in any position.

### List of symbols

1 - body
2 - blade
3 - shaft
4 - half-plane
5 - arm
6 - counterweight
7 - contact strip
8 - partition
9 - shaft holder
10 - torsion spring
11 - blade's hinge
12 - blade's sealing
13 - body's sealing
14 - handle
15 - protrusion
α - angle of slope from the half-plane
A, B, C, D - quarter-space (quadrant)
F2 - blade's weight
F6 - counterweight's weight

## Claims

1. A non-return valve, mainly smoke and/or fire non-return valve, whose body (1) is designed for a connection to an air duct and/or is designed for an insertion to the air duct, where the non-return valve includes two tiltable wing blades (2) placed in the body (1) on a common axis or on two axes placed in parallel, which are in principle perpendicular onto a flow of gases, where a placement of the blade allows for its tilting from a closed position to an open position, whereby the first blade (2) in the closed position is in a first half-plane (4) and the second blade (2) in the closed position is in the second half-plane (4), and where a flexible element presses the blade (2) to the closed position in which the blade (2) closes the inner flow towards the body (1), whereby the flexible element acts upon the blade (2) in a direction against the permitted flow of the gases, and where the blade (2) has a counterweight (6) connected on an entry side for an inlet of gases to at least partially balance the blade (2) in its axis of placement,
**is characterized by the fact**, that
the first half-plane (4) and the second half-plane (4) of the blades (2) in the closed position are divergent, and an intersection line of the first half-plane (4) and the second half-plane (4) is identical to or parallel with the axis of the blades (2) or the axes of the blades (2), whereby at least part of the counterweight (6) is present in a half-space opposite to the half-space with the respective blade (2) which it balances, and an angle formed between the first half-plane (4) and the second half-plane (4) in the closed position from the side of the gases inlet is larger than 180°.

2. The non-return valve, mainly smoke and/or fire non-return valve according to the claim 1 **is characterized by the fact**, that the intersection line of the first half-plane (4) and the second half-plane (4) runs through a central plane of the body (1), preferably it runs symmetrically through the body (1) and, at the same time, perpendicularly onto a longitudinal axis of the body (1).

3. The non-return valve, mainly smoke and/or fire non-return valve according to the claim 1 or 2 **is characterized by the fact**, that the angle formed between the first half-plane (4) and the second half-plane (4) from the side of the gases inlet is 180°+ 2α, where α is up to 45°, preferably α ranges from 1° to 30°, especially preferably α is 11°.

4. The non-return valve, mainly smoke and/or fire non-return valve according to any of the claims 1 to 3 **is characterized by the fact**, that the blades (2) in the closed position abut by their edges to a contact strip (7) which is fixedly connected to the edge of the body (1), whereby the contact strip (7) lies in the half-planes (4) or next to half-planes (4); preferably the body (1) is equipped by a sealing (13) on an outer circumference, especially preferably the sealing (13) includes a cold sealing and a hot sealing next to each other or placed on each other.

5. The non-return valve, mainly smoke and/or fire non-return valve according to the claim 4 **is characterized by the fact**, that the contact strip (7) is part of a plate which has a partition 8 on which a bending line of the half-planes (4) is led; preferably the contact strip (7) and/or the partition (8) have a sealing (12) to seal a contact with the blade (2) and preferably the contact strip (7) is welded or soldered to the edge of the body (1).

6. The non-return valve, mainly smoke and/or fire non-return valve according to any of the claims 1 to 5 **is characterized by the fact**, that the counterweight (6) protrudes through the half-plane's (4) limit by at least a quarter of a transversal inner dimension of the body (1); preferably a centre of gravity of a movable group is in the axis of a shaft (3) of the respective blade (2).

7. The non-return valve, mainly smoke and/or fire non-return valve according to any of the claims 1 to 6 **is characterized by the fact**, that the blade (2) is from sheet metal, preferably the blade (2) includes a stiffening hem and/or a stiffening fold, especially preferably the blade (2) has a recess to receive at least part of the counterweight (6) of the neighbouring blade (2).

8. The non-return valve, mainly smoke and/or fire non-return valve according to any of the claims 1 to 7 **is characterize**d **by the fact**, that the counterweight (6) is connected to the respective blade (2) which it balances through an arm (5) whose bend is shaped in order to hang over a middle zone with the shaft (3).

9. The non-return valve, mainly smoke and/or fire non-return valve according to the claim 8 **is characterized by the fact**, that the counterweight (6) and the arm (5) are formed as a single whole, preferably from a steel wire with a circular cross-section.

10. The non-return valve, mainly smoke and/or fire non-return valve according to any of the claims 1 to 9 **is characterized by the fact**, that the counterweight (6) has a group of bends in order to achieve greater length and weight; preferably these bends are in a single plane which is basically parallel with the neighbouring blade (2) in the closed position.

11. The non-return valve, mainly smoke and/or fire non-return valve according to any of the claims 5 to 10 **is characterized by the fact**, that the partition (8) has irregular edges, preferably the edges are wavy and/or sawtooth-like and/or sinusoidal.

12. The non-return valve, mainly smoke and/or fire non-return valve according to the claim 11 **is characterized by the fact**, that the edge of the partition (8) has a group of recurrent protrusions (15) alternating with straight lines; preferably a shape of the edges of the partition (8) on opposite sides is mutually offset, especially preferable the alternation of the protrusions (15) and the straight lines corresponds to the alternation of hinges (11) of the blades, or the multiples of the hinges (11).

13. The non-return valve, mainly smoke and/or fire non-return valve according to any of the claims 1 to 12 **is characterized by the fact**, that a pair of the neighbouring blades (2) is placed on the common shaft (3) on which at least one torsion spring (10) is pulled on, whereby the arms of the torsion spring (10) lean onto a surface of the blades (2) from an outlet side.

14. The non-return valve, mainly smoke and/or fire non-return valve according to any of the claims 1 to 13 **is characterized by the fact**, that the shaft (3) is placed in a holder (9) which is a continuation of the body (1) through the intersection line of the half-planes (4); preferably the holder (9) runs through openings in the plate.

15. The non-return valve, mainly smoke and/or fire non-return valve according to any of the claims 1 to 14 **is characterized by the fact**, that it is equipped by at least one handle (14), preferably the first handle (14) on the inlet side in form of a rod which is placed in opposite openings in the body (1), and it has the second handle (14) which is connected to the holder (9).
